(19) Europäisches Patentamt
European Patent Office
Office européen des brevets

(11) Veröffentlichungsnummer: **0 498 156 B1**

(12) # EUROPÄISCHE PATENTSCHRIFT

(45) Veröffentlichungstag der Patentschrift: **28.09.94**

(51) Int. Cl.$^5$: **C08G 18/66**, C08G 18/08, C08G 18/10, C08G 18/80, C09D 175/06, //(C09D175/06, 161:20)

(21) Anmeldenummer: **92100237.4**

(22) Anmeldetag: **09.01.92**

(54) **Wässrige Polyester für festkörperreiche Einbrennlacke.**

(30) Priorität: **22.01.91 DE 4101697**

(43) Veröffentlichungstag der Anmeldung:
**12.08.92 Patentblatt 92/33**

(45) Bekanntmachung des Hinweises auf die Patenterteilung:
**28.09.94 Patentblatt 94/39**

(84) Benannte Vertragsstaaten:
**AT BE CH DE ES FR GB IT LI NL SE**

(56) Entgegenhaltungen:
**EP-A- 0 140 323**
**EP-A- 0 157 291**
**EP-A- 0 379 007**
**EP-A- 0 427 028**
**DE-A- 3 516 806**

(73) Patentinhaber: **BAYER AG**

**D-51368 Leverkusen (DE)**

(72) Erfinder: **Blum, Harald, Dr.**
**Auf dem Westkamp 1**
**W-4175 Wachtendonk 2 (DE)**
Erfinder: **Burgdörfer, Hans-Heribert, Dr.**
**Goffmeweg 49**
**W-5000 Köln 80 (DE)**
Erfinder: **Sickert, Armin, Dipl.-Ing.**
**Schreberstrasse 9**
**W-4150 Krefeld (DE)**
Erfinder: **Höhlein, Peter, Dr.**
**Windmühlenweg 3e**
**W-4152 Kempen 3 (DE)**

EP 0 498 156 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige Polyester für festkörperreiche Einbrennlacke, die Urethan-, Carboxylat- und Hydroxylgruppen sowie nur geringe Mengen an organischen Hilfslösemitteln und flüchtigen Neutralisationsmitteln enthalten, ein Verfahren zur Herstellung solcher Polyester und ihre Verwendung.

Es ist bekannt, daß durch Verwendung interner oder externer nichtionischer Emulgatoren wäßrige Bindemittel hergestellt werden können, die einen relativ hohen Festkörpergehalt und wenig oder keine organischen Hilfslöser enthalten (vergl. z.B. Die Angewandte Makromolekulare Chemie 123/124 (1984), Seiten 285 bis 306 und Seiten 437 ff., sowie D.H. Solomon, "The Chemistry of Organic Film Formers", John Wiley & Sons, Inc. (1967), Seiten 280 ff.). Da diese Emulgatoren auch nach der Aushärtung im Film verbleiben, können sie die Eigenschaften der Überzüge wie z.B. die Wasser-, Detergentien- und Witterungsbeständigkeit negativ beeinflussen. Ein weiteres Problem solcher nichtionischer Emulsionen ist ihre meist mangelnde Stabilität, z.B. gegenüber Scherbeanspruchung bei der Lackherstellung, sie neigen zum Koagulieren, darüber hinaus ist es z.B. nicht möglich, mit solchen Produkten glänzende Überzüge zu erhalten.

Wasserverdünnbarkeit von Polymeren kann auch durch chemisch eingebaute, mit Basen neutralisierte Säuregruppen, insbesondere Carboxylgruppen, bzw. durch chemisch eingebaute, mit Säuren neutralisierte tertiäre Aminogruppen, erhalten werden (vergl. z.B. DE-OS 2 749 692, EP-A 218 906 oder L. Dulog, Die Angew. Makro. Chemie 123/124 (1984), S. 437 ff). Bei der Aushärtung von Überzügen, die solche Bindemittel erhalten, werden die Filme dadurch wasserunlöslich, daß die hydrophilen Salzgruppen dissoziieren und die flüchtigen Neutralisationsmittel verdunsten. Je nach Art des Neutralisationsmittels und in Abhängigkeit von den Härtungsbedingungen verbleiben dabei jedoch mehr oder weniger große Mengen Neutralisationsmittel im Film.

Bleibt die überwiegende Menge des Neutralisationsmittels im Film, so stellen die resultierenden, hydrophilen Salzgruppen potentielle Angriffsstellen z.B. für Feuchtigkeit dar, so daß die Lackqualität dadurch negativ beeinflußt werden kann. Verdunstet dagegen das Amin in größeren Mengen, so widerspricht das im Prinzip der Forderung nach einem umweltverträglichen Bindemittel, vor allem dann, wenn gleichzeitig noch größere Mengen flüchtiger, organischer Hilfslösemittel eingesetzt werden.

Um die Umweltbelastung so niedrig wie möglich zu halten, sind dann aufwendige Absorption- oder Verbrennungsanlagen erforderlich.

Aus diesen Gründen werden wäßrige Lacke gefordert, die möglichst wenig organische Hilfslösemittel enthalten und darüber hinaus mit einer möglichst geringen Menge flüchtiger Neutralisationsmittel auskommen.

Von einem modernen, wäßrigen Lack wird darüber hinaus noch ein möglichst hoher Festkörpergehalt gefordert.

Dies geschieht zum einen aus Gründen der Energieeinsparung, beispielsweise durch reduzierte Transportkosten und geringerem Wärmebedarf für das Verdampfen des Wassers beim Aushärten solcher Bindemittel, zum anderen können damit in der Regel günstigere Applikations- bzw. Filmeigenschaften wie z.B. höhere erzielbare Schichtstärken erreicht werden. Trockenfilmschichtstärken von 50 bis 70 µm sind mit wäßrigen Bindemitteln in der Regel nur schwer erreichbar, da bei solchen, für wäßrige Bindemittel relativ hohen Schichtstärken eine starke Neigung zur Bildung von Kochblasen, Kratern und anderen Filmstörungen besteht. Üblicherweise werden diese Störungen durch Zugabe von flüchtigen Hochsiedern, organischen Hilfslösemitteln oder ähnlichen Zusätzen beseitigt bzw. reduziert, dadurch geht jedoch ein Teil der Umweltverträglichkeit der wäßrigen Bindemittel wieder verloren.

Von modernen, wäßrigen Bindemitteln wird außerdem eine sehr gute Verseifungs- und Lagerstabilität gefordert, was insbesondere bei lösemittelarmen Bindemitteln nicht immer gegeben ist.

In vielen Anwendungsbereichen werden im verstärkten Maße hochflexible Beschichtungen eingesetzt, z.B. im Industrielackbereich, im Steinschlagschutz und Füllerbereich in der Automobillackierung, für rißüberbrückende Beschichtungen usw.. Deshalb sollten die neuen Bindemittel die Herstellung hochflexibler Überzüge ermöglichen, sei es in Kombination mit Vernetzerharzen oder als flexibilisierender Zusatz zu bereits bestehenden, an sich weniger flexiblen Bindemittelkombinationen.

Es war demzufolge die der Erfindung zugrundeliegende Aufgabe, ein wäßriges Bindemittel für festkörperreiche Einbrennlacke zur Verfügung zu stellen, welches die genannten Anforderungen erfüllt. Die damit hergestellten Lacke sollen dann insbesondere weniger als 6,0 Gew.- %, vorzugsweise weniger als 4,5 Gew.-% organisches Hilfslösemittel, weniger als 1,1, vorzugsweise weniger als 0,9 Gew.-% Neutralisationsmittel, sowie Festkörpergehalte ≧ 50 Gew.- %, vorzugsweise ≧ 54 Gew.- % aufweisen. Darüber hinaus soll das Bindemittel freie Hydroxylgruppen enthalten, um Vernetzungsreaktionen bei Temperaturen >110 °C zu ermöglichen. Die erfindungsgemäßen Bindemittel sollen zur Herstellung elastischer Überzüge geeignet und

außerdem mit hoher Schichtstärke störungsfrei applizierbar sein. Die erfindungsgemäßen Bindemittel sollen in Kombination mit Vernetzerharzen als Einbrennlacke lagerstabil sein.

Überraschenderweise wurde gefunden, daß diese Aufgabe durch die Bereitstellung des nachstehend näher beschriebenen Bindemittels gelöst werden kann.

Während es sich bei den erfindungsgemäßen Polyesterharzen um nicht-trocknende Polyolkomponenten für wäßrige Zweikomponenten-Einbrennsysteme handelt, befaßt sich die EP-A-0 379 007 mit oxidativ trocknenden Alkydharzen, in welche zwingend oxidativ trocknende Fettsäuren $a_{1)}$ eingebaut werden, während solche Säuren erfindungsgemäß nicht zum Einsatz gelangen bzw. rein hypothetisch allenfalls als Komponente $a_{1,5)}$ denkbar sind. Diese Komponente kommt erfindungsgemäß jedoch allenfalls von max. 1,5 Mol-% in Betracht, während gemäß Vorveröffentlichung die zumindest zu 60 Gew.-% aus derartigen Säuren bestehende Komponente $a_{1)}$ in Mengen von mindestens 40 Gew.-% zum Einsatz kommt.

Gegenstand der Erfindung sind wäßrige Polyester für festkörperreiche Einbrennlacke, dadurch gekennzeichnet, daß sie

a) 35,0 bis 65,0 Gew.-% eines Urethan-, Carboxyl- und Hydroxylgruppen aufweisenden Polyesterharzes,
b) 0,1 bis 1,5 Gew.-% eines basischen Neutralisationsmittels,
c) 0 bis 7,5 Gew.-% eines organischen Hilfslösemittels sowie
d) 26 bis 64,9 Gew.-% Wasser enthalten,

wobei die Komponente a) eine Säurezahl von unter 22, eine Hydroxylzahl von 40 bis 110, ein Molekulargewicht $M_w$ = 8.000 bis 50.000, sowie einen Urethangruppengehalt

$$(-NH-\underset{\underset{\displaystyle O}{\|}}{C}-O-)$$

von 6,5 bis 11 Gew.-% aufweist und durch Umsetzung von

$a_{1)}$ 77 bis 89 Gew.-% eines verzweigten Polyesterpolyols mit einer Hydroxylzahl von 125 bis 175, einer Säurezahl unter 4 und einem Molekulargewicht $M_w$ von 2.500 bis 6.500,
$a_{2)}$ 2,5 bis 4,5 Gew.-% einer 2,2-Bis(hydroxymethyl)alkancarbonsäure und
$a_{3)}$ 0 bis 3.5 Gew.-% einer Diolkomponente des Molekulargewichtsbereichs 62 bis 250, mit
$a_{4)}$ 9 - 19 Gew.-% einer zu mindestens 50 Mol-% aus Hexamethylendiisocyanat bestehenden Diisocyanatkomponente erhalten wird, wobei das in a) enthaltene Polyesterpolyol $a_{1)}$ besteht aus dem Veresterungsprodukt von

$a_{1,1)}$ 40 bis 48 Mol-% 1,6-Hexandiol, Neopentylglykol und/oder 1,4-Cyclohexandimethanol,
$a_{1,2)}$ 8 bis 14 Mol-% Trimethylolpropan und/oder Glycerin,
$a_{1,3)}$ 25 bis 39 Mol-% Isophthalsäure, Phthalsäureanhydrid und/oder Hexahydrophthalsäureanhydrid,
$a_{1,4)}$ 8 bis 14 Mol-% Adipinsäure, Sebacinsäure und/oder Azelainsäure,
$a_{1,5)}$ 0 bis 1,5 Mol-% anderer Carbonsäuren,

und wobei durch die Komponente b) 35 bis 100 % der Carboxylgruppen der Komponente a) in die Carboxylatform überführt sind, und wobei sich die genannten Prozentsätze zu a), b), c) und d), sowie zu $a_{1)}$, $a_{2)}$, $a_{3)}$ und $a_{4)}$ jeweils zu 100 % ergänzen.

Gegenstand der Erfindung sind auch wäßrige, lagerstabile, festkörperreiche Einbrennlacke, dadurch gekennzeichnet, daß sie bestehen aus

A) 60 bis 95 Gew.-% Polyester der erfindungsgemäßen Art,
B) 5 bis 40 Gew.-% mindestens eines hydroxyreaktiven Vernetzerharzes,

wobei die Summe aus A) und B) gleich 100 ist, und die Gewichtsprozentwerte sich jeweils auf den Festkörpergehalt von A) bzw. B) beziehen, sowie

C) 0 bis 180 Gew.-% bezogen auf die Summe aus A) und B) an Hilfs- und Zusatzstoffen,

wobei die Lacke, bezogen auf das Gesamtgewicht, bis zu 6,0 Gew.-% an organischen Lösungsmitteln und/oder bis zu 1,1 Gew.-% an flüchtigen Neutralisationsmitteln enthalten können und einen Festkörpergehalt von mindestens 50 Gew.-% aufweisen.

Gegenstand der Erfindung ist auch ein Verfahren zur Herstellung dieser wäßrigen Polyester für festkörperreiche Einbrennlacke, welches dadurch gekennzeichnet ist, daß man eine Lösung in einem organischen Lösungsmittel c) des Polyesterpolyols $a_{1)}$ der Säure $a_{2)}$ und gegebenenfalls des Diols $a_{3)}$ mit der Diisocyanatkomponente $a_{4)}$ vereinigt, die spontan ablaufende Isocyanat-Additionsreaktion unter Mitverwendung geeigneter Urethanisierungs-Katalysatoren ablaufen läßt, bis keine NCO-Gruppen mehr nachweisbar sind, anschließend das basische Neutralisationsmittel b) und das Wasser d) hinzufügt und dann gegebenenfalls das Lösungsmittel zumindest teilweise destillativ entfernt.

Gegenstand der Erfindung ist schließlich auch die Verwendung der erfindungsgemäßen wäßrigen Polyester in Kombination mit Vernetzerharzen und gegebenenfalls anderen wasserlöslichen, wasserdispergierbaren oder wasseremulgierbaren Bindemitteln in Lacken, Beschichtungs- und Dichtmassen.

Im Rahmen der Erfindung bedeuten

Polyesterpolyol das 100 %ige Umsetzungsprodukt aus mehrwertigen Carbonsäuren bzw. Carbonsäureanhydriden und mehrwertigen Alkoholen;

Polyesterbindemittel bzw. -harz das Umsetzungsprodukt der Polyesterpolyole mit dem vorstehend genannten Reaktanten $a_2$), $a_4$) und gegebenenfalls $a_3$) und

wäßriger Polyester die wäßrig/(organische) Lösung oder Dispersion des zumindest teilweise neutralisierten Polyesterharzes.

Vorzugsweise bestehen die erfindungsgemäßen Polyester aus:

35,0 bis 65,0 Gew.-% a),

0,1 bis 1,1 Gew.-% b),

0,0 bis 6,5 Gew.-% c) und

27,4 bis 64,9 Gew.-% d).

Bei der Komponente a) handelt es sich um ein Urethan-, Carboxyl- sowie Hydroxylgruppen enthaltendes Polyesterharz, welches ein nach der Methode der Gelpermeationschromatographie unter Verwendung von Polystyrol als Standard ermittelbares, als Gewichtsmittel $M_w$ bestimmtesMolekulargewicht von 8.000 bis 50.000, vorzugsweise von 10.000 bis 29.000, eine Säurezahl unter 22, vorzugsweise 12 bis 20, sowie eine Hydroxylzahl von 40 bis 110, bevorzugt von 60 bis 100, aufweist.

Der Gehalt des Harzes an Urethangruppen liegt im allgemeinen bei 6,5 bis 11,0, vorzugsweise bei 7,0 bis 10,3 und ganz besonders bevorzugt bei 7,0 bis 8,5 Gew.-%.

Die Zahlenangaben bezüglich der Hydroxyl- und Säurezahlen beziehen sich stets auf die Menge KOH in "mg", die zur Titration von 1 g Substanz verbraucht wird.

Die Komponente a) wird erhalten durch Umsetzung von

$a_{1)}$ 77 bis 89, vorzugsweise 79 bis 87 Gew.-% eines verzweigten Polyesterpolyols mit einer Hydroxylzahl von 125 bis 175, vorzugsweise 140 bis 165, einer Säurezahl von unter 4, vorzugsweise unter 2,2 und einem Molekulargewicht $M_w$ von 2.500 bis 6.000, vorzugsweise 3.500 bis 5.000 und

$a_{2)}$ 2,5 bis 4,5, vorzugsweise 3,25 bis 4,1 Gew.-% einer 2,2-Bis(hydroxymethyl)alkancarbonsäure, vorzugsweise Dimethylolpropionsäure, sowie

$a_{3)}$ 0 bis 3,5, vorzugsweise 0 bis 2 Gew.-% einer Diolkomponente des Molekulargewichtsbereichs 62 bis 250, mit

$a_{4)}$ 9 bis 19, vorzugsweise 10 bis 17, und ganz besonders bevorzugt 10 bis 14,5 Gew.-% einer Diisocyanatkomponente des Molekulargewichtsbereichs 168 bis 300, wobei mindestens 50 Mol-% und ganz besonders bevorzugt 100 Mol-% der Komponente $a_{4)}$ aus Hexamethylendiisocyanat besteht,

und wobei sich die genannten Prozentsätze jeweils zu 100 ergänzen, und wobei das Äquivalentverhältnis von Isocyanatgruppen der Komponente $a_{4)}$ zu Hydroxylgruppen der Komponenten $a_{1)}$ bis $a_{3)}$ bei 0,35 : 1 bis 0,8 : 1 liegt.

Die verzweigten Polyesterpolyole $a_{1)}$ ihrerseits stellen vorzugsweise das Umsetzungsprodukt von

$a_{1,1)}$ 40 bis 48 Mol-%, insbesondere 42 bis 46 Mol-% 1,6-Hexandiol, Neopentylglykol und/oder 1,4-Cyclohexandimethanol

$a_{1,2)}$ 8 bis 14 Mol-% Trimethylolpropan und/oder Glycerin, insbesondere 8 bis 12 Mol-% Trimethylolpropan,

$a_{1,3)}$ 25 bis 39 Mol-% Isophthalsäure, Phthalsäureanhydrid und/oder Hexahydrophthalsäureanhydrid, vorzugsweise 25 bis 29 Mol-% Isophthalsäure und 4 bis 7 Mol-% Phthalsäureanhydrid und/oder Hexahydrophthalsäureanhydrid,

$a_{1,4)}$ 8 bis 14 Mol-% Adipinsäure, Sebacinsäure und/oder Azelainsäure, insbesondere 10 bis 12,5 Mol-% Adipinsäure, sowie

$a_{1,5)}$ 0 bis 1,5 Mol-% anderer Carbonsäuren dar, wobei sich auch hier die genannten Prozentsätze zu 100 ergänzen.

Die Herstellung der verzweigten Polyesterpolyole $a_{1)}$ erfolgt durch eine an sich bekannte Umsetzung der genannten Ausgangsmaterialien, wobei diese Umsetzung gegebenenfalls unter Zuhilfenahme von üblichen Veresterungskatalysatoren vorzugsweise nach dem Prinzip einer Schmelz- oder Azeotropkondensation, gegebenenfalls auch unter Anlegen eines Vakuums, bei Temperaturen von 140 bis 240 °C unter Wasserabspaltung erfolgt.

Im Falle einer azeotropen Veresterung der Komponenten $a_{1,1)}$ bis $a_{1,5)}$ wird das Schleppmittel, üblicherweise Isooctan, Xylol, Toluol oder Cyclohexan, nach beendeter Reaktion im Vakuum abdestilliert.

Bei der Komponente $a_{2)}$ handelt es sich um mindestens eine 2,2-Bis(hydroxymethyl)alkancarbonsäure mit insgesamt mindestens 5 Kohlenstoffatomen, vorzugsweise um 2,2-Bis(hydroxymethyl)-propionsäure (Dimethylolpropionsäure) .

Bei der Komponente $a_{3)}$ handelt es sich um eine (cyclo)aliphatische Diolkomponente des Molekulargewichtsbereichs 62 bis 250. Geeignet sind z.B. Ethylenglykol, 1,2- und 1,3-Propylenglykol, Neopentylglykol, Butandiol-1,3, Butandiol-1,4, 1,4-Cyclohexandimethanol, 1,6-Hexandiol, Butandiol-2,3, Butandiol-1,3, Diethylenglykol, Triethylenglykol, Dipropylenglykol, 1,4-Cyclohexandiol, 1,8-Octandiol, hydrierte Bisphenole, Tricyclodecandimethanol (TCD-Diol), Butendiol-1,4, Butindiol-1,4 oder Gemische dieser Diole.

Bei der Komponente $a_{4)}$ handelt es sich um eine Diisocyanatkomponente des Molekulargewichtsbereichs 168 bis 300. Geeignete Diisocyanate sind z.B. 1-Isocyanato-3,3,5-trimethyl-5-isocyanatomethylcyclohexan, Perhydro-2,4'- und 4,4'-diphenylmethandiisocyanat, 2,4- und 2,6-Toluidendiisocyanat und Hexamethylendiisocyanat. Die Komponente $a_{4)}$ besteht zumindest zu 50 Mol-%, bevorzugt ausschließlich aus Hexamethylendiisocyanat.

Zur Herstellung des urethan-, carboxyl- und hydroxylfunktionellen Polyesterharzes a) kann beispielsweise so vorgegangen werden, daß das verzweigte Polyesterpolyol $a_{1)}$, die 2,2-Bis(hydroxymethyl)-alkancarbonsäure $a_{2)}$ und gegebenenfalls die aliphatische Diolkomponente $a_{3)}$ in einem vorzugsweise mit Wasser mischbaren organischen Lösungsmittel homogenisiert und dann bei 20 bis 120 °C das Diisocyanat $a_{4)}$ innerhalb eines Zeitraums von 1 Minute bis zu 4 Stunden zugegeben und das Reaktionsgemisch solange erhitzt wird, bis keine NCO-Gruppen mehr vorhanden sind.

Die Umsetzung wird in Gegenwart von geeigneten Katalysatoren wie z.B. Dibutylzinnoxid, Zinn(II)-octoat, Dibutylzinndilaurat oder auch tertiären Aminen wie Triethylamin durchgeführt, die im allgemeinen in Mengen von 0,005 bis 1 Gew.-%, bezogen auf das Gewicht des gesamten Reaktionsansatzes zugesetzt werden. Zur Reaktionsbeschleunigung kann auch bei höheren Temperaturen unter Druck umgesetzt werden. Die Umsetzung erfolgt vorzugsweise in inerten Lösemitteln, wie z.B. Aceton, Dimethyldiglykol, Butylacetat, N-Methylpyrrolidon oder Methylethylketon bei Festgehalten von 40 bis 96 Gew.-%.

Nach der Urethanisierungsreaktion werden im allgemeinen 0,1 bis 1,5, vorzugsweise 0,1 bis 1,1 Gew.-%, bezogen auf das Gewicht des letztlich erhaltenen wäßrigen Polyesters, des basischen Neutralisationsmittels b) zugegeben. Geeignet sind z.B. Ammoniak, Triethylamin, Triethanolamin, Monoethanolamin, Diethanolamin, N-Methyldiethanolamin, Morpholin, N-Methylmorpholin, 2-Amino-2-methyl-1-propanol und Gemische derartiger Basen. Bevorzugt sind Dimethylethanolamin, N-Methylmorpholin, Methyldiethanolamin und Ammoniak. Grundsätzlich geeignet, jedoch weniger bevorzugt sind auch Alkalihydroxide wie beispielsweise Natrium- oder Kaliumhydroxid. Die Zugabe eines Neutralisationsmittels kann sich dann erübrigen, wenn als Katalysator für die Isocyanat-Additionsreaktion ein tertiäres Amin wie beispielsweise Triethylamin eingesetzt worden ist, welches die Doppelfunktion eines Neutralisationsmittels haben kann, falls es in einer entsprechenden Menge zum Einsatz gelangt.

Anschließend wird entionisiertes Wasser, Komponente d) zugegeben. Gegebenenfalls kann das organische Lösemittel dann teilweise oder vollständig, gegebenenfalls unter Anlegen eines leichten Vakuums, abdestilliert werden. Dabei wird vorzugsweise die Menge Wasser so gewählt, daß der resultierende wäßrige Polyester einen Festkörpergehalt von 35 bis 65 Gew.-% aufweist.

Es ist auch möglich, einen Teil des eingesetzten Wassers wieder abzudestillieren, um einen möglichst hohen Festkörpergehalt zu erzielen. Die erfindungsgemäßen Polyester A) enthalten im allgemeinen 0 bis 7,5, vorzugsweise 0 bis 6,5 Gew.-% an organischen Lösungsmitteln, so daß die gebrauchsfertigen Einbrennlacke einen Maximalgehalt von 6,0 Gew.-% Lösungsmittel, bezogen auf das Gesamtgewicht der Lacke, aufweisen.

Die erfindungsgemäßen Polyester A) können mit wasserverdünnbaren bzw. -dispergierbaren OH-reaktiven Vernetzern kombiniert werden. Es ist jedoch auch möglich, als Vernetzerharze hydrophobe, für sich allein im Wasser nicht dispergierbare Substanzen einzusetzen, da die urethan-, hydroxyl- und carboxylatgruppenhaltigen Polyesterbindemittel die Funktion eines Emulgators für Vernetzerharze übernehmen können.

Geeignete Vernetzerharze B) sind beispielsweise wasserverdünnbare bzw. -dispergierbare Melamin- bzw. Harnstoff-Formaldehyd-Kondensationsprodukte, wie sie z.B. bei D.H. Solomon, The Chemistry of Organic Filmformers, S. 235 ff, John Wiley & Sons, Inc., New York, 1967, beschrieben sind. Die Melaminharze können jedoch auch ganz oder teilweise durch andere vernetzende Aminoplaste, wie sie z.B. in "Methoden der organischen Chemie" (Houben-Weyl), Bd. 14/2, Teil 2, 4. Auflage, Georg Thieme Verlag, Stuttgart 1963, S. 319 ff, beschrieben sind, ersetzt werden.

Ebenfalls geeignete Vernetzerharze sind blockierte Polyisocyanate, beispielsweise auf Basis von Isophorondiisocyanat, Hexamethylendiisocyanat, 1,4-Diisocyanatcyclohexan, Bis-(4-isocyanato-cyclohexyl)-methan, 1,3-Diisocyanatobenzol, 1,4-Diisocyanatobenzol, 2,4-Diisocyanato-1-methylbenzol, 1,3-Diisocyanato-2-methylbenzol, 1,3-Bisisocyanatomethylbenzol, 2,4-Bisisocyanatomethyl-1,5-dimethylbenzol, Bis-(4-isocyanatophenyl)-propan, Tris-(4-isocyanatophenyl)-methan, Trimethyl-1,6-diisocyanatohexan oder blockierte "Lackpolyisocyanate" wie Biuretgruppen aufweisende Polyisocyanate auf Basis von 1,6-Diisocyanatohexan, Isocyanuratgruppen aufweisenden Polyisocyanate auf Basis von 1,6-Diisocyanatohexan oder Urethangruppen aufweisenden Lackpolyisocyanaten auf Basis von 2,4- und/ oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartiger Polyhydroxylverbindungen andererseits, jeweils mit blockierten Isocyanatgruppen. Geeignete Blockierungsmittel für diese Polyisocyanate sind beispielsweise einwertige Alkohole wie Methanol, Ethanol, Butanol, Hexanol, Benzylalkohol, Oxime wie Acetoxim, Methylethylketoxim, Lactame wie $\epsilon$-Caprolactam, Phenole oder CH-acide Verbindungen wie z.B. Diethylmalonat.

Bevorzugte Vernetzerharze sind jedoch Melamin- und Harnstoffharze, insbesondere alkylierte Melamin-Formaldehydharze mit 1 bis 8 Kohlenstoffatomen in der Alkylkette wie z.B. butylierte und/oder methylierte oder methoxymethylierte Melaminharze.

Die Herstellung der erfindungsgemäßen wäßrigen Einbrennlacke erfolgt durch Vermischen von

A) 60 bis 95, vorzugsweise 65 bis 90 Gew.-% Polyester A) mit

B) 5 bis 40, vorzugsweise 10 bis 35 Gew.-% mindestens eines hydroxyreaktiven Vernetzerharzes der beispielhaft genannten Art, wobei sich die Angaben für A) und B) jeweils auf 100 % Festgehalt beziehen, und wobei die Summe aus A) und B) gleich 100 ist, sowie

C) 0 bis 180, vorzugsweise 10 bis 140 Gew.-% der aus der Lacktechnologie üblichen Hilfs- und Zusatzstoffe,

wobei die Zusammensetzung der Einzelkomponenten im übrigen so gewählt wird, daß der gebrauchsfertige Einbrennlack einen Gehalt an organischem Lösungsmittel von maximal 6, vorzugsweise maximal 4,5 Gew.-%, einen Gehalt an flüchtigen Neutralisationsmitteln von maximal 1,1, vorzugsweise maximal 0,9 Gew.-%, sowie einen Festkörpergehalt von mindestens 50, vorzugsweise mindestens 54 Gew.-% aufweist.

Bei den gegebenenfalls mitverwendeten Hilfs- und Zusatzmitteln C) handelt es sich beispielsweise um Pigmente wie z.B. Titandioxid-, Eisenoxid-, Bleioxid-, Zinkoxid-Pigmente, Füllstoffe wie beispielsweise Erdalkalisilikate, Ruß (der auch die Funktion eines Pigments übernehmen kann), Talk, Graphit, organische Farbstoffe, Verlaufhilfsmittel, Antischaummittel, UV-Absorber, Antiabsetzmittel, Verdickungsmittel, Netzmittel, Antioxidantien, Hautverhinderungsmittel oder Vernetzungskatalysatoren.

In den erfindungsgemäßen Einbrennlacken können die erfindungswesentlichen Polyester A) auch in Kombination mit weiteren, hydroxyfunktionellen Polymeren D) vorliegen. Ihre Menge kann, bezogen auf Festkörper, bis zu 400 Gew.-% der Menge der in der Komponente A) enthaltenen Komponente a) betragen. Der Anteil der Komponente B) (Vernetzerharz), bezogen auf Festkörper, liegt in den erfindungsgemäßen Einbrennlacken bei 5 bis 50 Gew.-%, bezogen auf das Gewicht der in der Komponente A) vorliegenden Komponente a) und der gegebenenfalls mitverwendeten Komponente D).

Gegebenenfalls mitverwendete hydroxyfunktionelle Polymere D) sind beispielsweise solche der in DE-OS 2 528 212, DE-OS 2 556 621 oder EP-A 0 218 906 genannten Art.

Zu den bevorzugten Anwendungsgebieten der erfindungsgemäßen Einbrennlacke gehören beispielsweise die Einbrennfüllerlackierung oder die naß in naß applizierte Steinschlagschutzgrundierung, wie sie im Automobillackaufbau eingesetzt werden kann. Die erfindungsgemäßen Lacke können auch für die Kunststoff-, Folien-, Metall-, Holz-, mineralische Untergrundlackierung eingesetzt werden. Sie eignen sich auch als festkörperreiche Einschichtdecklage auf gegebenenfalls vorbehandelten Untergründen.

Die erfindungsgemäßen Einbrennlacke können die aus der Lacktechnologie bekannten Hilfs- und Zusatzmittel enthalten und durch an sich bekannte Methoden wie Spritzen, Fluten, Gießen, Tauchen, Walzen, Streichen auf das zu beschichtende Substrat aufgebracht werden.

Die erfindungsgemäßen Einbrennlacke sind sowohl bei Raumtemperatur als auch bei mäßig erhöhter Temperatur von bis zu 50 °C lange Zeit lagerstabil und härten bei Temperaturen von oberhalb 100 °C, vorzugsweise oberhalb 110 °C zu vernetzten Filmen eines hohen Eigenschaftsniveaus aus.

In den nachfolgenden Beispielen beziehen sich alle Prozentangaben auf Gewichtsprozente, falls nicht anders vermerkt.

Beispiel 1

Polyesterpolyol $a_{1)}$:

In ein 25-1-Reaktionsgefäß mit Rühr-, Kühl-, Heizvorrichtung und Wasserabscheider werden

$a_{1,1)}$ 8.496 g (44,4 Mol-%) 1,6-Hexandiol,

$a_{1,2)}$ 2.412 g (11,1 Mol-%) Trimethylolpropan,
$a_{1,3)}$ 7.470 g (27,8 Mol-%) Isophthalsäure,
$a_{1,4)}$ 2.628 g (11,1 Mol-%) Adipinsäure,
$a_{1,5)}$ 1.332 g ( 5,6 Mol-%) Phthalsäureanhydrid
eingewogen und unter $N_2$-Durchleiten in einer Stunde auf 140 °C aufgeheizt. Dann wird in 7 Stunden auf 220 °C aufgeheizt und solange unter Wasserabspaltung verestert, bis die Säurezahl ≦ 2 ist. Die Hydroxylzahl des so hergestellten verzweigten Polyesterharzes beträgt 152. Die Auslaufviskosität (DIN-Becher 4 mm, 23 °C, 70 % in Xylol) beträgt 115 Sekunden, Das Molekulargewicht $M_w$ = 4.300.

Erfindungsgemäßer wäßriger Polyester

889,3 g der Polyesterpolyol $a_{1)}$, 31,2 g Dimethylolpropionsäure und 1,3 g Zinn(II)-octoat werden in 1.321,5 g Aceton gelöst und auf 58 °C erhitzt. Anschließend werden 119,6 g Hexamethylendiisocyanat in 45 Minuten zudosiert. Anschließend wird solange gerührt, bis keine NCO-Gruppen mehr nachweisbar sind. Dann werden 8,3 g Dimethylethanolamin und nach 15 Minuten 840 g entsalztes Wasser zugesetzt.

Das Aceton wird bei leichtem Vakuum (40 bis 65 mbar) und 40 bis 50 °C Badtemperatur abdestilliert. Man erhält den wäßrigen Polyester 1), welcher
a) 55,4 Gew.-% eines Urethan-, Hydroxyl- und Carboxylgruppen enthaltendes Polyesterharzes,
b) 0,4 Gew.-% Dimethylethanolamin und
d) 44,2 Gew.-% Wasser enthält.

Das Molekulargewicht $M_w$ der Komponente a) beträgt 19.500, die Säurezahl 15, der Neutralisationsgrad ist 40 %.

Beispiel 2

In ein 5-1-Reaktionsgefäß mit Rühr-, Kühl- und Heizvorrichtung werden 1870 g Polyesterpolyol a1) aus Beispiel 1, 88 g Dimethylolpropionsäure, 2,8 g Zinn(II)-octoat und 329 g N-Methylpyrrolidon unter $N_2$-Atmosphäre eingewogen, auf 120 °C aufgeheizt und 30 Minuten homogenisiert. Dann wird auf 70 °C abgekühlt und 242 g Hexamethylendiisocyanat auf einmal zugegeben, wobei die Temperatur auf 90 °C ansteigt. Anschließend wird in 2 Stunden auf 130 °C aufgeheizt und solange gehalten, bis keine NCO-Gruppen mehr nachweisbar sind. Nach Abkühlen auf 100 °C werden 58,4 g Dimethylethanolamin und 2910 g entsalztes Wasser zugegeben. Man erhält den wäßrigen Polyester 2), welcher
a) 40,5 Gew.-% eines Urethan-, Hydroxyl- und Carboxylgruppen enthaltenden Polyesterharzes,
b) 1,0 Gew.-% Dimethylethanolamin,
c) 6,0 Gew.-% N-Methylpyrrolidon und
d) 52,5 Gew.-% Wasser enthält.

Die Säurezahl der 100 %igen Komponente a) beträgt 18, der Neutralisationsgrad ca. 95 %, der Urethangruppengehalt ca. 7,7 Gew.-% und die Hydroxylzahl ca. 90.

Beispiel 3

Entsprechend Beispiel 1) werden 1.726,6 g Polyesterpolyol $a_{1)}$, 83,2 g Dimethylolpropionsäure, 2,6 g Zinn(II) octoat und 270,4 g Hexamethylendiisocyanat in - 2.643 g Aceton zur Reaktion gebracht. Nach Ende der Umsetzung werden 22,1 g Dimethylethanolamin und 2.080 g Wasser zugegeben und dann Aceton und überschüssiges Wasser abdestilliert. Man erhält den wäßrigen Polyester 3), welcher
a) 55,9 Gew.-% eines Urethan-, Hydroxyl- und Carboxylgruppen enthaltendes Polyesterharzes,
b) 0,6 Gew.-% Dimethylethanolamin und
d) 43,5 Gew.-% Wasser enthält.

Das Molekulargewicht $M_w$ der Komponente a) beträgt ca. 20,000, die Säurezahl ca. 19, der Neutralisationsgrad ist ca. 40 %, der Urethangruppengehalt ca. 9,1 Gew.-%, die Hydroxylzahl ca. 77.

Beispiel 4

Entsprechend Beispiel 1) werden 1.664 g Polyesterpolyol $a_{1)}$, 72,8 g Dimethylolpropionsäure, 41,6 Neopentylglykol, 2,6 g Zinn(II)-octoat und 301,6 g Hexamethylendiisocyanat in 2,643 g Aceton zur Reaktion gebracht. Nach Ende der Umsetzung werden 19,3 g Dimethylethanolamin und dann 2.542 g Wasser zugegeben und anschließend Aceton und überschüssiges Wasser abdestilliert. Man erhält den wäßrigen Polyester 4), welcher

a) 52,1 Gew.-% eines Urethan-, Hydroxyl- und Carboxylgruppen enthaltenden Polyesterharzes,
b) 0,5 Gew.-% Dimethylethanolamin und
d) 47,4 Gew.-% Wasser enthält.

Das Molekulargewicht $M_w$ der Komponente a) beträgt ca. 26,000, die Säurezahl ca. 17, der Neutralisationsgrad ist 40 %, der Urethangruppengehalt ca. 10,1 Gew.-%, die Hydroxylzahl ca. 75.

Beispiel 5

Polyesterpolyol $a_{2)}$:

In ein 5-1-Reaktionsgefäß mit Rühr-, Kühl-, Heizvorrichtung und Wasserabscheider werden
$a_{2,1)}$ 813 g (22,2 Mol-%) 1,6-Hexandiol,
992 g (22,2 Mol-%) 1,4-Cyclohexandimethanol,
$a_{2,2)}$ 462 g (11,1 Mol-%) Trimethylolpropan,
$a_{2,3)}$ 1430 g (27,8 Mol-%) Isophthalsäure,
$a_{2,4)}$ 503 g (11,1 Mol-%) Adipinsäure und
$a_{2,5)}$ 265 g ( 5,6 Mol-%) Hexahydrophthalsäureanhydrid
eingewogen und unter $N_2$-Atmosphäre in einer Stunde auf 140 °C aufgeheizt. Anschließend wird in 8 Stunden auf 220 °C aufgeheizt und solange verestert, bis die Säurezahl ≦ 2 ist. Die Hydroxylzahl des so hergestellten verzweigten Polyesterharzes beträgt 145.

Erfindungsgemäßer wäßriger Polyester

863,3 g des oben hergestellten Polyesterpolyols $a_{2)}$, 41,6 g Dimethylolpropionsäure, 1,3 g Zinn(II)-octoat werden entsprechend Beispiel 1) in 1.322 g Aceton mit 135,2 g Hexamethylendiisocyanat zur Reaktion gebracht. Nach Ende der Umsetzung werden 12,4 g Dimethylethanolamin und dann 1.040 g Wasser zugegeben. Nach dem destillativen Abtrennen des Acetons erhält man den wäßrigen Polyester 5) welcher
a) 50,2 Gew.-% eines Urethan-, Hydroxyl- und Carboxylgruppen enthaltenden Polyesterharzes,
b) 0,6 Gew.-% Dimethylethanolamin und
d) 49,2 Gew.-% Wasser enthält.

Die Säurezahl des Produkts ist ca. 19, der Neutralisationsgrad ca. 45 %, der Urethangruppengehalt ist ca. 9,1 Gew.-%, die Hydroxylzahl ist ca. 66.

Beispiel 6

Entsprechend Beispiel 2) werden 1870 g des in Beispiel 1 beschriebenen Polyesterpolyols $a_{1)}$, 88 g Dimethylolpropionsäure, 2,8 g Zinn(II)-octoat und 252 g Hexamethylendiisocyanat in 191 g N-Methylpyrrolidon zur Reaktion gebracht.

Nach Ende der Umsetzung werden 58,6 g Dimethylethanolamin und 3050 g Wasser zugegeben. Man erhält den wäßrigen Polyester 6), welcher
a) 40,0 Gew.-% eines Urethan-, Hydroxyl- und Carboxylgruppen enthaltenden Polyesterharzes,
b) 1,0 Gew.-% Dimethylethanolamin,
c) 3,5 Gew.-% N-Methylpyrrolidon und
d) 55,5 Gew.-% Wasser enthält.

Das Molekulargewicht $M_w$ der Komponente a) beträgt ca. 12.000, die Säurezahl ca. 19, der Neutralisationsgrad ist ca. 95 %, der Urethangruppengehalt ist ca. 7,7 Gew.-%, die Hydroxylzahl ca. 90.

Verwendungsbeispiele

Die erfindungsgemäßen Bindemittel zeigen sowohl bei der Klarlackherstellung als auch bei der Herstellung von z.B. pigmentierten Einbrennfüllern (Verhältnis Bindemittel : Melaminharz : (Pigment + Füllstoff) : Hilfsmittel = 39 : 6 : 53 : 2 Gew.-Teile) mittels eines Dissolver-Rührwerks eine für wäßrige Bindemittel sehr geringe Neigung zur Schaumbildung, wodurch die Wartezeit zwischen Anreibung und Applikation verkürzt und gleichzeitig eine sicherere Applikation möglich wird.

Beispiel 7 (pigmentierter Decklack)

Der Polyester aus Beispiel 2 wurde im Vergleich zu einem handelsüblichen wäßrigen Polyesterharz (Hydroxyl- und Carboxylatgruppen enthaltendes Polyesterharz, Bayhydrol D 155, Bayer AG) auf Stahlblechen (Bonder 1041) als weißpigmentierter Decklack in Kombination mit einem Aminovernetzerharz geprüft. Das Bindemittel-Vernetzerharz (®Cymel 327 der Firma American Cyanamid)-Verhältnis betrug 70:30, die Pigmentierungshöhe (Bayertitan R-KB-4) 100 %. (Die Pigmentierungshöhe bezeichnet die Menge in Gew.-%, bezogen auf Bindemittelkomponenten inklusive Vernetzer). Die Filme wurden 10 Minuten bei 160 °C eingebrannt. Die Lackschichtstärke betrug ca. 35 µm.

| | erfindungsgemäß | Vergleich |
|---|---|---|
| Lackfestkörper | 58,3 % | 44,8 % |
| Organische Lösemittel in Lack | 4,0 % | 10,2 % |
| Neutralisationsgrad | 100 % | 110 % |
| pH-Wert | 8,3 | 8,7 |
| Viskosität[1)] | 44 s | 46 s |
| Glanz 20 °/60 ° | 68/89 | 58/91 |
| Bleistifthärte | 5 H | 2 H |
| Erichsendehnung | 7,7 mm | 7,8 mm |
| Weißgrad[2)] | 89/83 | 89/83 |
| MEK-Wischtest[3)] | o.B. | 100 x weich, matt |
| Lackviskosität nach 2 Wochen Lagerung bei 40 °C [1)] | 44 s | 120 s |

[1)] Auslaufzeit im DIN 4 Becher bei 23 °C
[2)] Die beiden Werte für den Weißgrad (Elvepho) wurden nach 10 min/160 °C - bzw. 1 Stunde/180 °C - Einbrennen bestimmt.
[3)] Es wurden 100 Doppelhübe mit einem mit Methylethylketon getränkten Wattebausch durchgeführt, um eine Aussage über den Grad der Vernetzung zu erhalten; o.B. = ohne Befund

Mit dem erfindungsgemäßen Polyester können welßpigmentierte Decklacke formuliert werden, die einen erheblich höheren Festkörpergehalt (+13% absolut) bei gleichzeitig deutlich reduziertem Gehalt flüchtiger organischer Lösemittel (-6 % absolut) aufweisen. Die erfindungsgemäßen Einbrennlacke zeigen bei Temperaturlagerung eine ausgezeichnete Viskositäts- und Lagerstabilität. Die damit hergestellten Überzüge bieten Vorteile im Glanz, Härte und Lösemittelbeständigkeit.

Beispiel 8 (Steinschlagschutz-Zwischengrundierungen)

Unter Verwendung der Polyester 1), 3), 4) und 5) wurden Steinschlagschutz-Zwischengrundierungen hergestellt. Hierzu wurden jeweils eine solche Menge der wäßrigen Polyester eingesetzt, die 75 Gew.-Teilen Feststoff entspricht und mit jeweils 25 Gew.-Teilen eines handelsüblichen Melaminharzes (®Cymel 327 der Firma American Cyanamid), 25 Gew.-Teilen Mikrotalk, 0,5 Gew.-Teile Entschäumer DNE (Bayer AG), 3,0 Gew.-Teile Verlaufhilfsmittel (®Additol XW 395 der Hoechst AG) und 1 Gew.-Teil Antiabsetzmittel (Aerosil R 972 der Degussa AG) abgemischt. Die auf diese Weise erhaltenen Grundierungen (Festgehalt ca. 55 %) wurden auf Bleche appliziert, bei Raumtemperatur 40 Minuten abgelüftet und dann 20 Minuten bei 165 °C eingebrannt, die Schichtstärke betrug ca. 20 µm.

Folgende Ergebnisse wurden erhalten:

| Polyesterbindemittel | Pendelhärte nach DIN 53157 (sec.) | Anlösbarkeit* | Erichsentiefung nach DIN 53156 (mm) |
|---|---|---|---|
| 1 | 65 | 0 1 2 2 | > 10 |
| 3 | 76 | 1 1 1 2 | > 10 |
| 4 | 66 | 0 0 1 2 | > 10 |
| 5 | 95 | 0 0 1 2 | > 10 |

* Die Anlösbarkeit wurde durch Belastung für 5 Minuten mit einem Lösemittel enthaltenden Wattebausch getestet, Als Lösemittel wurden Xylol, Methoxypropylacetat, Ethylacetat und Aceton geprüft. Die erreichbaren Werte sind 0 bis 5, wobei 0 = ohne Befund, 5 = abgelöst.

Die erhaltenen Filme sind alle klar, homogen, hochelastisch und vernetzt.

Beispiel 9

Im folgenden Beispiel wird die Verwendung eines erfindungsgemäßen Polyesters als festkörpererhöhende und elastifizierende Komponente in einer Einbrennfüllerlackierung überprüft, wobei folgende Komponenten eingesetzt wurden:

a) handelsüblicher, wasserlöslicher, OH-funktioneller Polyester mit Trimellithsäureanhydrid modifiziert, Festkörpergehalt 63 % in Wasser, Butylglykol, Dimethylethanolamin (20 : 12 : 5), OH-Zahl = 59, Säurezahl = 50
b) Polyester 3 (Festkörpergehalt: 55,9 %),
c) handelsübliches Aminovernetzerharz ®Maprenal MF 904, Lieferform (Hersteller: Hoechst AG).
d) Pigmentgemisch, bestehend aus 54,5 Gew.-Teilen Bayer-Titan R-KB-4, 0,5 Gew.-Teilen ®Bayferrox 303 T, Hersteller: Bayer AG, Leverkusen, und 25 Gew.-Teilen Mikrotalk
e) handelsübliches Verlaufhilfsmittel (®Additol XW 395, Lieferform, Hersteller: Hoechst AG)
f) handelsübliches Verdickungsmittel (®Bermodul PUR 2100, 5 %ig, Hersteller: Fa. Langer & Co)
g) handelsüblicher Entschäumer (Entschäumer DNE, Lieferform, Hersteller: Bayer AG)
h) handelsübliches Antiabsetzmittel (®Aerosil R 972, Lieferform, Hersteller: Degussa AG)
i) handelsüblicher Weichmacher (®Unimoll BB, Lieferform, Hersteller: Bayer AG)

| | Lack 1 | Lack 2 |
|---|---|---|
| Komponente a) | 105 Gew.-Teile | 139,9 Gew.-Teile |
| b) | 39,4 " | - |
| c) | 12,6 " | 12,6 " |
| d) | 80 " | 80 " |
| e) | 3,0 | 3,0 |
| f) | 4,0 | 4,0 |
| g) | 0,5 | 0,5 |
| h) | 1,5 | 1,5 |
| i) | 1,0 | 1,0 |

Die Beschichtungsmittel wurden mit Wasser auf Verarbeitungsviskosität (30 sec. Auslaufzeit DIN-4-Becher, 23 °C) eingestellt und durch Spritzen auf Bleche appliziert.

| | Lack 1 | Lack 2 |
|---|---|---|
| Festkörper: | 54 % | 47 % |
| Pendelhärte (DIN 53157) (sec.) | 135 | 164 |
| Erichsentiefung (DIN 53156) (mm) | 7 | 4 |
| Anlösbarkeit (Xylol, MPA, Ethylac., Aceton) | 0 0 2 2 | 1 1 3 4 |
| Haftungstest Gitterschnitt 0 bis 5 | Gt 0 | Gt 0 |

Prüfung im Lackaufbau mit KTL-Grundierung und Decklack:

| Steinschlagschutz | | |
|---|---|---|
| - VDA-Beschlußtest[1] 2 x 500 g/l Bar | 1 | 2 |
| - Hahnenpicktest[2] RT/ -20 °C | < 2 / < 2 | < 2 / 4 |
| - DOJ-Wert (Filmoptik) | 80 | 70 |
| - Kondenswassertest 480 h | ohne Befund | ohne Befund |

[1] Werte von 1 bis 6,
1 = sehr guter Haftungsverbund
6 = keine Haftung
[2] Test nach Daimler-Benz, angegeben ist die abgeplatzte Fläche in $mm^2$,
< 2 = sehr gut,
4 = durchschnittlicher Wert

Durch den Austausch von 114 des herkömmlichen Bindemittels gegen einen erfindungsgemäßen Polyester wird die Einbrennfüllerformulierung in Festkörper deutlich angehoben, Elastizität, Steinschlagschutz und Filmoptik verbessert und außerdem die erzielbare, fehlerfreie Schichtstärke auf praxisgerechte Werte bis 65 µm angehoben.

Beispiel 10

1.794,2 g der Polyesterpolyol $a_{1)}$ aus Beispiel 1, 57,2 g Dimethylolpropionsäure und 2,6 g Zinn(II)-octoat werden in 2.643 g Aceton gelöst und bei 58 °C mit 228,8 g Hexamethylendiisocyanat umgesetzt. Nachdem keine NCO-Gruppen mehr nachweisbar sind, werden 15,2 g Dimethylethanolamin und 1.520 g entsalztes Wasser zugegeben. Das Aceton wird abdestilliert. Man erhält den wäßrigen Polyester 10), welcher

a) 57,7 Gew.-% eines Urethan-, Hydroxyl- und Carboxylgruppen enthaltendes Polyesterharzes,
b) 0,4 Gew.-% Dimethylethanolamin und
d) 41,9 Gew.-% Wasser enthält.

Das Molekulargewicht $M_w$ der Komponente a) beträgt ca. 19.000, Die Säurezahl 13,5, der Neutralisationsgrad ist ca. 40 %, der Urethangruppengehalt ist ca. 7,7 Gew.-%, die Hydroxylzahl ist ca. 81.

Der Polyester 10) wurde im Vergleich zu einem handelsüblichen, wäßrigen Polyesterharz (OH-funktioneller Polyester, mit Trimellithsäureanhydrid modifiziert, Festkörpergehalt 55 % in Wasser, Butylglykol, Isobutanol, Dimethylethanolamin (20 : 15 : 6 : 4)) auf Brillanzblechen als weißer Einschichteinbrennlack in Kombination mit einem Aminovernetzerharz geprüft.

Das Polyester-Melaminharz (Cymel 327)-Verhältnis betrug 80 : 20, die Pigmentierungshöhe (Bayertitan R-KB-4) 100 %. Die Spritzviskosität betrug ca. 40 sec. im DIN-4-mm-Becher bei 23 °C, beide Lacke wurden dabei auf pH-Wert 8,7 eingestellt. Die Filme wurden 10 Minuten bei 160 °C eingebrannt.

| | erfindungsgemäß | Vergleich |
|---|---|---|
| Lackfestkörper | 55,2 % | 45,5 % |
| Organische Lösemittel im Lack | 0,6 % | 10,2 % |
| Kochblasengrenze (Schichtstärke) | 70 µm | 50 µm |
| Glanz ($60^0$ C) | 83 | 91 |
| MEK-Wischtest[1)] | 100 x, weich | 100 x, weich, matt |
| Nagelhärte | fast nagelhart | nagelhart |
| Weißgrad[2)] (Elrepho) | 89/87 | 90/85 |

1) Es wurden 100 Doppelhübe mit einem mit Methylethylketon getränkten Wattebausch durchgeführt, um eine Aussage über den Grad der Vernetzung zu erhalten.

2) Die beiden Werte für den Weißgrad wurden nach 10 min/$160^0$ C- bzw. 1 Stunde/$180^0$ C-Einbrennen bestimmt.

Mit dem erfindungsgemäßen Polyester können Weißlacke formuliert werden, die bei vergleichbaren Filmeigenschaften einen um ca. 10 % höheren Festgehalt und darüber hinaus nur noch 0,6 % gegenüber 10,2 % flüchtige organische Lösemittel aufweisen und damit auch strengste Auflagen zur Lösemittelemission bei der Applikation von Lacken gerecht werden können. Darüber hinaus können auch deutlich höhere kochblasenfreie Filmschichtstärken erzielt werden.

## Patentansprüche

1. Wäßrige Polyester für festkörperreiche Einbrennlacke, dadurch gekennzeichnet, daß sie
   a) 35,0 bis 65,0 Gew.-% eines Urethan-, Carboxyl- und Hydroxylgruppen aufweisenden Polyesterharzes,
   b) 0,1 bis 1,5 Gew.-% eines basischen Neutralisationsmittels,
   c) 0 bis 7,5 Gew.-% eines organischen Hilfslösemittels sowie
   d) 26 bis 64,9 Gew.-% Wasser enthalten,

   wobei die Komponente a) eine Säurezahl von unter 22, eine Hydroxylzahl von 40 bis 110, ein Molekulargewicht $M_w$ = 8.000 bis 50.000, sowie einen Urethangruppengehalt

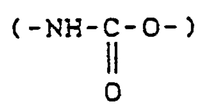

   von 6,5 bis 11 Gew.-% aufweist und durch Umsetzung von
   $a_{1)}$ 77 bis 89 Gew.-% eines verzweigten Polyesterpolyols mit einer Hydroxylzahl von 125 bis 175, einer Säurezahl unter 4 und einem Molekulargewicht $M_w$ = 2.500 bis 6.500,
   $a_{2)}$ 2,5 bis 4,5 Gew.-% einer 2,2-Bis(hydroxymethyl)alkancarbonsäure und

$a_{3)}$ 0 bis 3,5 Gew.-% einer Diolkomponente des Molekulargewichtsbereichs 62 bis 250, mit

$a_{4)}$ 9 - 19 Gew.- % einer zu mindestens 50 Mol-% aus Hexamethylendiisocyanat bestehenden Diisocyanatkomponente erhalten wird, wobei das in a) enthaltene Polyesterpolyol $a_{1)}$ besteht aus dem Veresterungsprodukt von

$a_{1,1)}$ 40 bis 48 Mol-% 1,6-Hexandiol, Neopentylglykol und/oder 1,4-Cyclohexandimethanol,

$a_{1,2)}$ 8 bis 14 Mol-% Trimethylolpropan und/oder Glycerin,

$a_{1,3)}$ 25 bis 39 Mol-% Isophthalsäure, Phthalsäureanhydrid und/oder Hexahydrophthalsäureanhydrid,

$a_{1,4)}$ 8 bis 14 Mol-% Adipinsäure, Sebacinsäure und/oder Azelainsäure,

$a_{1,5)}$ 0 bis 1,5 Mol-% anderer Carbonsäuren,

und wobei durch die Komponente b) 35 bis 100% der Carboxylgruppen der Komponente a) in die Carboxylatform überführt sind, und wobei sich die genannten Prozentsätze zu a), b), c) und d), sowie zu $a_{1)}$, $a_{2)}$, $a_{3)}$ und $a_{4)}$ jeweils zu 100% ergänzen.

**2.** Polyester gemäß Anspruch 1, dadurch gekennzeichnet, daß sie

a) 35 bis 65 Gew.-% eines Urethan-, Carboxyl- und Hydroxylgruppen aufweisenden Polyesterharzes,

b) 0,1 bis 1,1 Gew.-% eines basischen Neutralisationsmittels

c) 0 bis 6,5 Gew.-% eines organischen Lösemittels sowie

d) 27,4 bis 64,9 Gew.-% Wasser enthalten,

wobei die Komponente a) eine Säurezahl von 12 bis 20, eine Hydroxyzahl von 60 bis 100, ein Molekulargewicht $M_w$ = 10. 000 bis 29.000, sowie einen Urethangruppengehalt

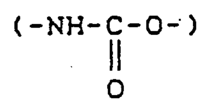

von 7,0 bis 10,3 Gew.-% aufweist, und

durch Umsetzung von

$a_{1)}$ 79 bis 87 Gew.-% eines verzweigten Polyesterpolyols mit einer Hydroxylzahl von 140 bis 165, einer Säurezahl von unter 2,2 und einem Molekulargewicht $M_w$ = 3.500 bis 5.000,

$a_{2)}$ 3,25 bis 4,1 Gew.-% Dimethylolpropionsäure,

$a_{3)}$ 0 bis 2 Gew.-% einer Diolkomponente des Molekulargewichtsbereichs 62 bis 250 und

$a_{4)}$ 10 bis 14,5 Gew.-% einer zu mindestens 50 Mol-% aus Hexamethylendiisocyanat bestehenden Diisocyanatkomponente

erhalten wird, und wobei das in a) enthaltene Polyesterpolyol $a_{1)}$ besteht aus dem Veresterungsprodukt von

$a_{1,1)}$ 42 bis 46 Mol-% 1,6-Hexandiol, Neopentylglykol und/oder 1,4-Cyclohexandimethanol,

$a_{1,2)}$ 8 bis 12 Mol-% Trimethylolpropan und/oder Glycerin,

$a_{1,3)}$ 26 bis 39 Mol-% Isophthalsäure, Phthalsäureanhydrid und/oder Hexahydrophthalsäureanhydrid,

$a_{1,4)}$ 10 bis 12,5 Mol-% Adipinsäure, Sebacinsäure und/oder Azelainsäure,

$a_{1,5)}$ 0 bis 1,5 Mol-% anderer Carbonsäuren,

und wobei sich die genannten Prozentsätze jeweils zu 100 % ergänzen.

**3.** Polyester gemäß Anspruch 1 und 2), dadurch gekennzeichnet, daß als Komponente $a_{4)}$ 10 - 14,5 Gew.-% Hexamethylendiisocyanat enthalten sind.

**4.** Wäßrige, lagerstabile, festkörperreiche Einbrennlacke, dadurch gekennzeichnet, daß sie bestehen aus

A). 60 bis 95 Gew.-% eines Polyesters gemäß den Ansprüchen 1 bis 3,

B) 5 bis 40 Gew.-% mindestens eines hydroxyreaktiven Vernetzerharzes,

wobei die Summe aus A) und B) gleich 100 ist und die Gew.-%-Werte sich jeweils auf den Festkörpergehalt von A) bzw. B) beziehen, sowie

C) 0 bis 180 Gew.-% bezogen auf die Summe A) und B) an **Hilfs- und Zusatzstoffen**

wobei die Lacke, bezogen auf das Gesamtgewicht, bis zu 6,0 Gew.-% an organischen Lösungsmitteln und/oder bis zu 1,1 Gew.-% an flüchtigen Neutralisationsmitteln enthalten können und einen Festkörpergehalt von mindestens 50 Gew.-% aufweisen.

**5.** Verfahren zur Herstellung von wäßrigen Polyestern gemäß Anspruch 1 bis 3, dadurch gekennzeichnet, daß man eine Lösung in einem organischen Lösungsmittel c) des Polyesterpolyols $a_{1)}$ der Säure $a_{2)}$ und gegebenenfalls des Diols $a_{3)}$ mit der Diisocyanatkomponente $a_{4)}$ vereinigt, die spontan abloufende Isocyanat-Additionsreaktion unter Mitverwendung geeigneter Urethanisierungs-Katalysatoren ablaufen läßt, bis keine NCO-Gruppen mehr nachweisbar sind, anschließend das basische Neutralisationsmittel b) und das Wasser d) hinzufügt und dann gegebenenfalls das Lösungsmittel zumindest teilweise destillativ entfernt.

**6.** Verwendung der wäßrigen Polyester gemäß Ansprüchen 1 bis 3 in Kombination mit Vernetzerharzen und gegebenenfalls anderen wasserlöslichen, wasserdispergierbaren oder wasseremulgierbaren Bindemitteln in festkörperreichen Lacken, Beschichtungs- und Dichtmassen.

**Claims**

**1.** Water-containing polyesters for high-solids stoving lacquers, characterized in that they contain

a) 35.0 to 65.0% by weight of a polyester resin containing urethane, carboxyl and hydroxyl groups,
b) 0.1 to 1.5% by weight of a basic neutralizing agent,
c) 0 to 7.5% by weight of an organic auxiliary solvent and
d) 26 to 64.9% by weight of water,

component a) having an acid value below 22, a hydroxyl value of 40 to 110, a molecular weight $M_w$ of 8,000 to 50,000 and a urethane group content

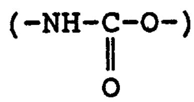

of 6.5 to 11% by weight and being obtained by reaction of

$a_{1)}$ 77 to 89% by weight of a branched polyester polyol with a hydroxyl value of 125 to 175, an acid value below 4 and a molecular weight $M_w$ of 2,500 to 6,500,
$a_{2)}$ 2.5 to 4.5% by weight of a 2,2-bis-(hydroxymethyl)alkanecarboxylic acid and
$a_{3)}$ 0 to 3.5% by weight of a diol component with a molecular weight in the range from 62 to 250

with

$a_{4)}$ 9 to 19% by weight of a diisocyanate component of which at least 50 mol-% consists of hexamethylene diisocyanate, the polyester polyol $a_{1)}$ present in a) consisting of the esterification product of

$a_{1.1)}$ 40 to 48 mol-% of 1,6-hexanediol, neopentyl glycol and/or 1,4-cyclohexane dimethanol,
$a_{1.2)}$ 8 to 14 mol-% of trimethylol propane and/or glycerol,
$a_{1.3)}$ 25 to 39 mol-% of isophthalic acid, phthalic anhydride and/or hexahydrophthalic anhydride,
$a_{1.4)}$ 8 to 14 mol-% of adipic acid, sebacic acid and/or azelaic acid,
$a_{1.5)}$ 0 to 1.5 mol-% of other carboxylic acids,

35 to 100% of the carboxyl groups of component a) being converted into the carboxylate form by component b) and the percentages mentioned in reference to a) , b), c) and d) and those mentioned in reference to $a_{1)}$, $a_{2)}$, $a_{3)}$ and $a_{4)}$ adding up to 100%.

**2.** Polyesters as claimed in claim 1, characterized in that they contain

a) 35 to 65% by weight of a polyester resin containing urethane, carboxyl and hydroxyl groups,
b) 0.1 to 1.1% by weight of a basic neutralizing agent,
c) 0 to 6.5% by weight of an organic solvent and
d) 27.4 to 64.9% by weight of water,

component a) having an acid value below 12, a hydroxyl value of 60 to 100, a molecular weight $M_w$ of 10,000 to 29,000 and a urethane group content

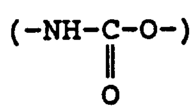

of 7.0 to 10.3% by weight and being obtained by reaction of

$a_{1)}$ 79 to 87% by weight of a branched polyester polyol with a hydroxyl value of 140 to 165, an acid value below 2.2 and a molecular weight $M_w$ of 3,500 to 5,000,

$a_{2)}$ 3.25 to 4.1% by weight of dimethylol propionic acid

$a_{3)}$ 0 to 2% by weight of a diol component with a molecular weight in the range from 62 to 250

and

$a_{4)}$ 10 to 14.5% by weight of a diisocyanate component of which at least 50 mol-% consists of hexamethylene diisocyanate,

the polyester polyol $a_{1)}$ present in a) consisting of the esterification product of

$a_{1.1)}$ 42 to 46 mol-% of 1,6-hexanediol, neopentyl glycol and/or 1,4-cyclohexane dimethanol,

$a_{1.2)}$ 8 to 12 mol-% of trimethylol propane and/or glycerol,

$a_{1.3)}$ 26 to 39 mol-% of isophthalic acid, phthalic anhydride and/or hexahydrophthalic anhydride,

$a_{1.4)}$ 10 to 12.5 mol-% of adipic acid, sebacic acid and/or azelaic acid,

$a_{1.5)}$ 0 to 1.5 mol-% of other carboxylic acids,

the percentages shown always adding up to 100%.

**3.** Polyesters as claimed in claims 1 and 2, characterized in that they contain 10 to 14.5% by weight of hexamethylene diisocyanate as component $a_{4)}$.

**4.** Water-based, storable high-solids stoving lacquers, characterized in that they consist of

A) 60 to 95% by weight of the polyester claimed in claims 1 to 3,

B) 5 to 40% by weight of at least one hydroxy reactive crosslinker resin,

the sum of A) and B) being 100 and the percentages by weight being based on the solids content of A) and B), and

C) 0 to 180% by weight, based on the sum of A) and B), of auxiliaries and additives,

the lacquers containing - based on the total weight - up to 6.0% by weight of organic solvents and/or up to 1.1% by weight of volatile neutralizing agents and having a solids content of at least 50% by weight.

**5.** A process for the production of the aqueous polyesters claimed in claims 1 to 3, characterized in that a solution in an organic solvent c) of the polyester polyol $a_{1)}$, the acid $a_{2)}$ and optionally the diol $a_{3)}$ is combined with the diisocyanate component $a_{4)}$, the spontaneous isocyanate addition reaction is left to take place in the presence of suitable urethanization catalysts until no more NCO groups can be detected, after which the basic neutralizing agent b) and the water d) are added and the solvent is then optionally removed at least partly by distillation.

**6.** The use of the water-containing polyesters claimed in claims 1 to 3 in combination with crosslinker resins and optionally other water-soluble, water-dispersible or water-emulsifiable binders in high-solids lacquers, coating compositions and sealing compounds.

## Revendications

**1.** Polyesters aqueux dur vernis à cuire au four à forte teneur en matières solides, caractérisés en ce qu'ils contiennent

**a)** 35,0 à 65,0 % en poids d'une résine de polyester à groupes uréthanne, carboxyle et hydroxy,

**b)** 0,1 à 1,5% en poids d'un agent neutralisant basique,

**c)** 0 à 7,5% en poids d'un solvant organique auxiliaire et

**d)** 26 à 64,9% en poids d'eau,

le composant a) ayant un indice d'acide inférieur à 22, un indice d'hydroxyle de 40 à 110, un poids moléculaire $M_w$ de 8 000 à 50 000, et une teneur en groupes uréthanne

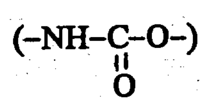

de 6,5 à 11% en poids, et étant obtenue par réaction de

**$a_1$)** 77 à 89% en poids d'un polyesterpolyol ramifié d'indice d'hydroxyle 125 à 175, indice d'acide inférieur à 4 et poids moléculaire $M_w$ = 2 500 à 6 500,

**$a_2$)** 2,5 à 4,5 % en poids d'un acide 2,2-bis-(hydroxyméthyl)-alcane carboxylique et

**$a_3$)** 0 à 3,5 % en poids d'un composant diol de poids moléculaire 62 à 250, avec

**$a_4$)** 9 à 19% en poids d'un composant diisocyanate consistant pour au moins 50 mol % en hexaméthylènediisocyanate, le polyesterpolyol $a_1$) contenu dans a) consistant lui-même en le produit d'estérification de

**$a_{1,1}$)** 40 à 48 mol % de 1,6-hexanediol, de glycol néopentylique et/ou de 1,4-cyclohexanediméthanol,

**$a_{1,2}$)** 8 à 14 mol % de triméthylolpropane et/ou de glycérol,

**$a_{1,3}$)** 25 à 39 mol % d'acide isophtalique, d'anhydride phtalique et/ou d'anhydride hexahydrophtalique,

**$a_{1,4}$)** 8 à 14 moi % d'acide adipique, d'acide sébacique et/ou d'acide azélaïque,

**$a_{1,5}$)** 0 à 1,5 mol % d'autres acides carboxyliques,

35 à 100% des groupes carboxyle du composant a) étant convertis en la forme carboxylate par le composant b), la pourcentages indiqués pour a), b), c) et d) d'une part, $a_1$), $a_2$), $a_3$) et $a_4$) d'autre part se complétant à 100 %.

**2.** Polyesters selon la revendication 1, caractérisés en ce qu'ils contiennent

**a)** 35 à 65% en poids d'une résine de polyester à groupes uréthanne, carboxyle et hydroxy,

**b)** 0,1 à 1,1 % en poids d'un agent neutralisant basique,

**c)** 0 à 6,5% en poids d'un solvant organique et

**d)** 27,4 à 64,9% en poids d'eau,

le composant a) ayant a indice d'acide de 12 à 20, un indice d'hydroxyle de 60 à 100,,un poids moléculaire $M_w$ de 10 000 à 29 000 et une teneur en groupes uréthanne

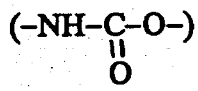

de 7,0 à 10,3% en poids,

et étant obtenu par réaction de

**$a_1$)** 79 à 87 % en poids d'un polyesterpolyol ramifié d'indice d'hydroxyle 140 à 165, indice d'acide inférieur à 2,2 et poids moléculaire $M_w$ = 3 500 à 5 000,

**$a_2$)** 3,25 à 4,1 % en poids d'acide diméthylolpropionique,

**$a_3$)** 0 à 2 % en poids d'un composant diol de poids moléculaire 62 à 250 et

**$a_4$)** 10 à 14,5% en poids d'un composant diisocyanate consistant lui-même pour au moins 50 mol % en hexaméthylènediisocyanate,

le polyesterpolyol $a_1$) contenu dans a) consistant en le produit d'estérification de

**$a_{1,1}$)** 42 à 46 mol % de 1,6-hexanediol, de glycol néopentylique et/ou de 1,4-cyclohexanediméthanol,

**$a_{1,2}$)** 8 à 12 mol % de triméthylolpropane et/ou de glycérol,

**$a_{1,3}$)** 26 à 39 mol % d'acide isophtalique, d'anhydride phtalique et/ou d'anhydride hexahydrophtalique,

**$a_{1,4}$)** 10 à 12,5 mol % d'acide adipique, d'acide sébacique et/ou d'acide azélaïque,

**$a_{1,5}$)** 0 à 1,5 mol % d'autres acides carboxyliques,

les pourcentages indiqués se complétant à 100%.

**3.** Polyesters selon les revendications 1 et 2, caractérisés en ce qu'ils contiennent en tant que composant $a_4$) 10 à 14,5 % a poids d'hexaméthylènediisocyanate.

**4.** Vernis aqueux stables à la conservation, à forte teneur en matières solides, à cuire au four, caractérisés en ce qu'ils consistent en

**A)** 60 à 95% en poids d'un polyester selon les revendications 1 à 3,

**B)** 5 à 40 % en poids d'au moins une résine réticulante réactive avec les groupes hydroxy,

la somme de A) et B) étant égale à 100 et les indications de pourcentages se rapportant dans chaque cas à la teneur en matières solides de A) et B) respectivement, et

**C)** 0 à 180% en poids, par rapport à la somme de A) et B), de produits auxiliaires et additifs,

les vernis pouvant contenir, sur leur poids total, jusqu'à 6,0% en poids de solvants organiques, et/ou jusqu'à 1,1% en poids d'agents neutralisants volatils, et ayant une teneur en matières solides d'au

moins 50 % en poids.

5. Procédé de préparation des polyesters aqueux selon les revendications 1 à 3, caractérisé en ce que l'on combine une solution du polyesterpolyol $a_1$), de l'acide $a_2$) et le ces échéant du diol $a_3$) dans un solvant organique c) avec le composant diisocyanate $a_4$), on laisse se dérouler la réaction d'addition des isocyanates qui se déclenche spontanément en utilisant conjointement des, catalyseurs appropriés d'uréthannisation jusqu'à ce qu'on ne retrouve plus de groupes NCO, on ajoute ensuite l'agent neutralisant basique b) et l'eau d) puis, le cas échéant, on élimine le solvant, en partie au moins, par distillation.

6. Utilisation des Polyesters aqueux selon les revendications 1 à 3, en combinaison avec des résines réticulantes et le ces échéant d'autres liants solubles dans l'eau, dispersables dans l'eau ou émulsionnables dans l'eau, dans des vernis, produits de revêtement et masses d'étanchéité à forte teneur en matières solides.